# EUROPEAN PATENT APPLICATION

(11) **EP 4 614 877 A2**
(43) Date of publication of application: **10.09.2025**
(21) Application number: 23899913.0
(22) Date of filing: 04.12.2023
(51) Int. Cl.: H04L 9/40

(54) **USER RECOGNITION METHOD AND APPARATUS, AND RELATED DEVICE AND STORAGE MEDIUM**

(30) Priority: 07.12.2022 CN 202211561042
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: NIE, Wenjing, Beijing 100053 (CN)
(74) Representative: GPI Brevets
(86) International application number: PCT/CN2023/136120
(87) International publication number: WO 2024/120335

(57) **Abstract**

A user identification method, an apparatus, a platform, a first node, a second node and a storage medium are provided. The method includes: determining, by the platform, based on first information of a first user, a strategy for the first user, wherein first information of a different user corresponds to a respective different strategy, the first information of the first user is associated with a network access duration of the first user, and at least two nodes in each strategy jointly predict whether the user is a fraudulent user; predicting whether the first user is the fraudulent user.

## Description

### CROSS-REFERENCE TO RELATED APPLICATION

The present application is based on and claims a priority of the Chinese patent application No. 202211561042.3 filed on December 7, 2022, a disclosure of which is incorporated herein by reference in its entirety.

### TECHNICAL FIELD

The present application relates to the field of data processing, and in particular, to a user identification method, an apparatus, a related device and a storage medium.

### BACKGROUND

With the increasing prevalence of online fraud, companies have invested significant efforts in anti-fraud measures to identify users at risk of fraudulent activities.

However, current technological methods offer limited improvement in detection effectiveness; in other words, the accuracy of identifying fraudulent users in the prior art is relatively low.

### SUMMARY

To solve the related technical problems, embodiments of the present application provide a user identification method, an apparatus, a related device and a storage medium.

The technical solutions of the embodiments of the present application are implemented as follows.

In a first aspect of an embodiment of the present application, a user identification method is provided, which is applied to a platform and includes:
determining, based on first information of a first user, a strategy for the first user, wherein first information of a different user corresponds to a respective different strategy, the first information of the first user is associated with a network access duration of the first user, and at least two nodes in each strategy jointly predict whether the user is a fraudulent user;
predicting whether the first user is the fraudulent user.

In an embodiment, the predicting whether the first user is the fraudulent user includes:
sending second information to a first node, wherein the second information is at least used to indicate/trigger/initiate to predict whether the first user is the fraudulent user, and the first node and at least one associated second node jointly predict whether the first user is the fraudulent user;
receiving third information sent by the first node, wherein the third information represents a prediction result for the first user;
predicting whether the first user is the fraudulent user by using the third information.

In an embodiment, the method further includes:
determining the first information of the first user.

In an embodiment, in response to the first information of the first user including that the network access duration of the first user is less than or equal to a first duration, the strategy for the first user includes determining whether the user is the fraudulent user by querying a list.

In an embodiment, the second information includes query-related information of the first user.

In an embodiment, the query is performed in plaintext; or
the query is performed by using privacy computing.

In an embodiment, in response to the first information of the first user including that the network access duration of the first user is greater than a first duration, the strategy for the first user includes determining whether the user is the fraudulent user through a model prediction.

In an embodiment, the second information includes identity-related information of the first user.

In an embodiment, the prediction is performed in plaintext; or
the prediction is performed by using privacy computing.

In a second aspect of the embodiment of the present application, a user identification method is further provided, which is applied to a first node and includes:
receiving second information sent by a platform, wherein the second information is at least used to indicate/trigger/initiate to predict whether a first user is a fraudulent user;
using the second information, in conjunction with at least one second node associated with the first node, to predict whether the first user is the fraudulent user;
sending third information to the platform, wherein the third information represents a prediction result for the first user.

In an embodiment, the second information includes query-related information of the first user.

In an embodiment, the query is performed in plaintext; or
the query is performed by using privacy computing.

In an embodiment, in response to finding, in a local database, fraud-related information that matches the query-related information, the third information is sent to the platform.

In an embodiment, in response to not finding, in a local database, fraud-related information that matches the query-related information, the query-related information is sent to the at least one second node and obtaining fourth information, wherein the fourth information represents a prediction result of the first node for the first user;
receiving at least one fifth information sent by the at least one second node, wherein the fifth information represents a prediction result of the second node for the first user.

In an embodiment, the second information includes identity-related information of the first user.

In an embodiment, the prediction is performed in plaintext; or
the prediction is performed by using privacy computing.

In an embodiment, the using the second information, in conjunction with at least one second node associated with the first node, to predict whether the first user is the fraudulent user includes:
using the identity-related information and a first model to obtain sixth information, wherein the sixth information represents a prediction result of the first node for the first user; and sending the identity-related information to the at least one second node;
receiving at least one seventh information sent by the at least one second node, wherein the seventh information represents a prediction result of the second node for the first user;
predicting whether the first user is the fraudulent user based on the sixth information and the at least one seventh information.

In an embodiment, the method further includes:
determining, based on a Private Set Intersection (PSI), intersection data between a first dataset of the first node and at least one second dataset of the at least one second node;
training a federated model by using the intersection data, wherein the federated model includes the first model.

In a third aspect of the embodiment of the present application, a user identification method is further provided, which is applied to a second node and includes:
receiving second information sent by a first node, wherein the second information is at least used to indicate/trigger/initiate to predict whether a first user is a fraudulent user;
using the second information to predict whether the first user is the fraudulent user, to jointly predict with the first node whether the first user is the fraudulent user.

In an embodiment, the second information includes query-related information of the first user.

In an embodiment, the using the second information to predict whether the first user is the fraudulent user includes:
searching a local database for fraud-related information that matches the query-related information to obtain a matching result;
sending fifth information to the first node, wherein the fifth information represents a prediction result of the second node for the first user.

In an embodiment, the query is performed in plaintext; or
the query is performed by using privacy computing.

In an embodiment, the second information includes identity-related information of the first user.

In an embodiment, the using the second information to predict whether the first user is the fraudulent user includes:
using the identity-related information and a second model to predict whether the first user is the fraudulent user;
sending seventh information to the first node, wherein the seventh information represents a prediction result of the second node for the first user.

In an embodiment, the prediction is performed in plaintext; or
the prediction is performed by using privacy computing.

In a fourth aspect of the embodiments of the present application, a communication apparatus is provided, which is arranged on a platform and includes:
a first processing unit, configured to determine, based on first information of a first user, a strategy for the first user, wherein first information of a different user corresponds to a respective different strategy, the first information of the first user is associated with a network access duration of the first user, and at least two nodes in each strategy jointly predict whether the user is a fraudulent user;
a first prediction unit, configured to predict whether the first user is the fraudulent user.

In the embodiments of the present application, it further provides a communication apparatus, which is arranged at a first node and includes:
a first receiving unit, configured to receive second information sent by a platform, wherein the second information is at least used to indicate/trigger/initiate to predict whether a first user is a fraudulent user;
a second prediction unit, configured to use the second information, in conjunction with at least one second node associated with the first node, to predict whether the first user is the fraudulent user;
a sending unit, configured to send third information to the platform, wherein the third information represents a prediction result for the first user.

In a fifth aspect of the embodiment of the present application, a communication apparatus is provided, which is arranged at a second node and includes:
a second receiving unit, configured to receive second information sent by a first node, wherein the second information is at least used to indicate/trigger/initiate to predict whether a first user is a fraudulent user;
a third prediction unit, configured to use the second information to predict whether the first user is the fraudulent user, to jointly predict with the first node whether the first user is the fraudulent user.

In a sixth aspect of the embodiment of the present application, a platform is further provided, including: a first processor and a first communication interface; wherein
the first processor is configured to determine, based on first information of a first user, a strategy for the first user, wherein first information of a different user corresponds to a respective different strategy, the first information of the first user is associated with a network access duration of the first user, and at least two nodes in each strategy jointly predict whether the user is a fraudulent user; and predict whether the first user is the fraudulent user.

In a seventh aspect of the embodiment of the present application, a first node is further provided, including: a second processor and a second communication interface; wherein
the second communication interface is configured to receive second information sent by a platform, wherein the second information is at least used to indicate/trigger/initiate to predict whether a first user is a fraudulent user;
the second processor is configured to use the second information, in conjunction with at least one second node associated with the first node, to predict whether the first user is the fraudulent user; and send third information to the platform, wherein the third information represents a prediction result for the first user.

In an eighth aspect of the embodiment of the present application, a second node is further provided, including: a third processor and a third communication interface; wherein
the third communication interface is configured to receive second information sent by the first node, wherein the second information is at least used to indicate/trigger/initiate to predict whether a first user is a fraudulent user;
the third processor is configured to use the second information to predict whether the first user is the fraudulent user, to jointly predict with the first node whether the first user is the fraudulent user.

In a ninth aspect of the embodiments of the present application, a platform is further provided, including: a first processor and a first memory for storing a computer program executable by the processor,
wherein the first processor is configured to execute the computer program to implement the steps of any of the methods on the platform side.

In a tenth aspect of the embodiments of the present application, there is further provided a first node, including: a second processor and a second memory for storing a computer program executable by the processor,
wherein the second processor is configured to execute the computer program to implement the steps of any one of the methods on the first node side.

In an eleventh aspect of the embodiments of the present application, a second node is further provided, including: a third processor and a third memory for storing a computer program executable by the processor,
wherein the third processor is configured to execute the computer program to implement the steps of any one of the methods on the second node side.

In a twelfth aspect of the embodiments of the present application, a storage medium storing a computer program is further provided. The computer program is used to be executed by a processor to implement the steps of any method on the platform side, or the steps of any method on the first node side, or the steps of any method on the second node side.

According to the user identification method, the apparatus, the related device and the storage medium provided in the embodiments of the present application, it enables the platform to determine, based on first information of the first user, a strategy for the first user; wherein first information of a different user corresponds to a respective different strategy, the first information of the first user is associated with a network access duration of the first user, and at least two nodes in each strategy jointly predict whether the user is a fraudulent user; predicting whether the first user is the fraudulent user. In the solutions provided in the embodiments of the present application, the service system (i.e., the platform) determines different joint anti-fraud strategies for different types of users based on the network access duration of the users, and predicts whether the user is a fraudulent user by combining multiple nodes (such as the first node and the second node) based on the joint anti-fraud strategies of the users. In other words, different nodes share data to jointly predict whether the user is a fraudulent user, so that accurate identification of the fraudulent user can be achieved.

### BRIEF DESCRIPTION OF THE DRAWINGS

FIG. 1 is a schematic flowchart of a first user identification method according to an embodiment of the present application;
FIG. 2 is a schematic flowchart of a second user identification method according to an embodiment of the present application;
FIG. 3 is a schematic flowchart of a third user identification method according to an embodiment of the present application;
FIG. 4 is a structural diagram of a data service network in an implementation example of the present application;
FIG. 5 is a schematic flowchart of a user identification method based on a data service network in an implementation example of the present application;
FIG. 6 is a schematic flowchart of a user identification method through a black/gray list in an example application of the present application;
FIG. 7 is a schematic flowchart of a user identification method through a federated model in an example application of the present application;
FIG. 8 is a structural diagram of a first communication apparatus according to an embodiment of the present application;
FIG. 9 is a structural diagram of a second communication apparatus according to an embodiment of the present application;
FIG. 10 is a structural diagram of a third communication apparatus according to an embodiment of the present application;
FIG. 11 is a structural diagram of a platform according to an embodiment of the present application;
FIG. 12 is a structural diagram of a first node according to an embodiment of the present application;
FIG. 13 is a structural diagram of a second node according to an embodiment of the present application;
FIG. 14 is a structural diagram of a user identification system according to an embodiment of the present application.

### DETAILED DESCRIPTION

The present application is further described in detail below in conjunction with the accompanying drawings and embodiments.

In the related art, in order to identify a fraudulent user, a solution for building an anti-fraud system has been proposed. Each of different enterprises builds an anti-fraud model through a local dataset to identify the fraudulent user. However, when the local dataset of the enterprise is small in size or lacks features, that is, the relevant service data exists in isolated silos across different enterprises, the performance of the constructed model will be insufficient and the accuracy of identifying the fraudulent user will be low. Meanwhile, since the fraudster often uses different service identities to commit fraud between multiple enterprises, the volume of fraud data accumulated by each enterprise is limited. Relying solely on the fraud data accumulated by a single enterprise to identify the fraudster results in low detection accuracy.

In view of the above, in various embodiments of the present application, a service platform determines different joint anti-fraud strategies for different types of users based on a network access duration of the user, and predicts whether the user is the fraudulent user by combining multiple nodes based on joint anti-fraud strategy of the user, that is, different nodes share data to jointly predict whether the user is the fraudulent user. The solution provided in the embodiments of the present application adopts different strategies for different types of users, and predicts whether the user is a fraudulent user by sharing data across nodes, thereby achieving accurate identification of the fraudulent user.

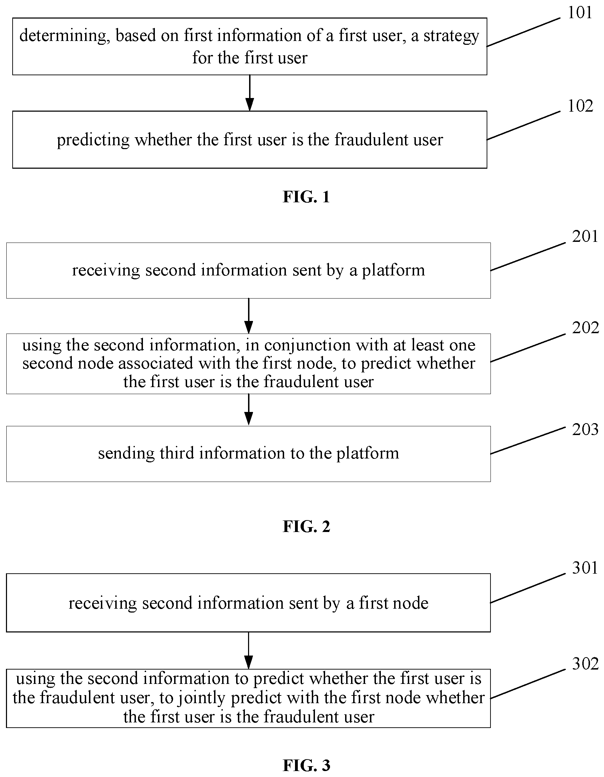

In the embodiments of the present application, it provides a user identification method, which is applied to a platform. As shown in FIG. 1, the method includes:
step 101: determining, based on first information of a first user, a strategy for the first user, wherein first information of a different user corresponds to a respective different strategy, the first information of the first user is associated with a network access duration of the first user, and at least two nodes in each strategy jointly predict whether the user is a fraudulent user;
step 102: predicting whether the first user is the fraudulent user.

In practical application, the platform may also be referred to as a service platform, a service system, etc. In the embodiments of the present application, it does not limit the name of the platform, as long as the function is achieved. The node may also be referred to as a computing node, a computing engine, an engine, etc. In the embodiments of the present application, it does not limit the name of the node, as long as its function is achieved. Different nodes can belong to different operators, and it can also be understood that different nodes belong to different institutions. Since at least two nodes are required to jointly predict whether the user is a fraudulent user in each strategy, the strategy may also be referred to as a joint anti-fraud strategy.

Before step 101, in order to determine a strategy for the first user, the platform needs to determine first information of the first user.

Based on this, in an embodiment, the method may further include:
determining first information of the first user.

In practical application, the first information of the user can be understood as an attribute of the user. Therefore, the first information of the first user can also be understood as the attribute of the first user.

It should be noted that the network access duration of the first user can be understood as the duration of the first user's access to the platform, or it can be understood as the duration of the first user establishing a connection with the platform. Therefore, the platform can search a local database for access-related information corresponding to the first user to determine the first information of the first user.

In step 102, the determined strategy is used to predict whether the first user is a fraudulent user. Predicting whether the first user is a fraudulent user can also be understood as determining whether the first user is a fraudulent user, or judging whether the first user is a fraudulent user. That is, in the embodiments of the present application, the terms predict, determine, and judge may be interpreted interchangeably.

In the related art, it is impossible to identify whether a new user (i.e., a user with short network access durations, also referred to as a new user) is a fraudulent user, but it is possible to identify whether a historical user (i.e., a user with long network access durations, also referred to as an existing user) is a fraudulent user to a certain extent. Therefore, in the embodiments of the present application, users are categorized into two types: a new user and a historical user based on the network access duration. Different joint anti-fraud strategies are adopted for the new user and the historical user.

The platform determines, based on first information of the first user, a strategy for the first user; wherein the first user may include a new user. Specifically, in an embodiment, the first information of the first user includes that the network access duration of the first user is less than or equal to a first duration; and the strategy for the first user includes determining whether the user is a fraudulent user by querying a list.

When the network access duration of the first user is less than or equal to the first duration, the platform can determine that the first user is a new user. The value of the first duration can be set as needed, such as 3 months, and the embodiments of the present application are not limited thereto.

In practical application, when query rules are inconsistent, the platform needs to align keywords with a first node and at least one second node to standardize the query rules between the platform side and the node side.

In the related art, a federated model is commonly used to predict the fraudulent user. However, the federated model cannot be used to predict the new user. In contrast, in the embodiments of the present application, for the new user, the platform can use a determined strategy, that is, a query-based approach to combine the at least two nodes to predict whether the first user is a fraudulent user.

Based on this, in an embodiment, the predicting whether the first user is the fraudulent user includes:
sending second information to a first node, wherein the second information is at least used to indicate/trigger/initiate to predict whether the first user is the fraudulent user, and the first node and at least one associated second node jointly predict whether the first user is the fraudulent user;
receiving third information sent by the first node, wherein the third information represents a prediction result for the first user;
predicting whether the first user is the fraudulent user by using the third information.

The second information includes query-related information of the first user.

In practical application, for the new user, the platform can adopt different queries to combine the first node with at least one associated second node to predict whether the first user is a fraudulent user. Specifically, the query may be conducted in plaintext or via privacy-preserving computation.

In the process of querying in plaintext, the platform can directly send the query-related information to the first node, and the query-related information can include query keywords; after receiving the query keywords, the first node searches for fraud-related information that matches the query keywords in the local database. In the case that the fraud-related information that matches the query keywords is found in the local database, the first node sends the third information to the platform, enabling the platform to use the third information to predict whether the first user is the fraudulent user; wherein, the platform can communicate with the first node through an Application Programming Interface (API). The query keyword can include the identifier of the first user, that is, the identity identifier of the first user, such as a user ID, which may also be referred to as an identification ID, that is, an identifier that can identify the identity of the user, such as a user name, mobile phone number, or ID card number, etc. In the embodiments of the present application, it does not limit this, as long as the identity of the user can be identified.

For example, in the case that fraud-related information that matches the query keyword is found in the local database, the prediction result includes the first node predicting that the first user is the fraudulent user. In this case, the platform can predict that the first user is the fraudulent user.

In the case that no fraud-related information that matches the query keyword is found in the local database, the first node sends the query keyword to the at least one second node through at least one API interface provided by the at least one second node, so as to query through the local database of the at least one second node. Then the first node sends the third information to the platform, allowing the platform to use the third information to predict the first user; wherein the third information may include a query result of the first node and the at least one second node.

For example, in the case that the first node fails to find fraud-related information that matches the query keyword, when fraud-related information that matches the query keyword is found through the local database of at least one second node, that is, the third information represents a second node predicting that the first user is the fraudulent user, then the platform can predict that the first user is the fraudulent user.

In the process of querying in plaintext, the query-related information is presented in plaintext, and correspondingly, the third information is also presented in plaintext.

In practical application, to protect the user's privacy information from being leaked, the platform can use privacy-preserving computation to query the first user, that is, the use privacy-preserving computation to query to protect the user's privacy information.

In the related art, in the case that only two parties are involved, the solution for identifying fraudulent users through privacy-preserving computation can specifically include a solution based on Homomorphic Encryption (HE), a solution based on Oblivious Transfer (OT), and a solution based on a hidden query; wherein, the solution based on HE has high computational complexity; the solution based on OT involves a large volume of data transmitted between a server and a client, requiring the server to simultaneously send ciphertext data proportional to the volume of data transmitted to the client; the solution based on the hidden query is only applicable in scenarios with an imbalance in data volume between the two parties, where there is a significant difference in data volume. In other words, for privacy-preserving computation, different processes need to be designed for different solutions, and the processes of the solutions are very different from each other. The user cannot choose independently based on their needs, and different solutions are applicable to different scenarios. For example, the HE is suitable for low-bandwidth scenarios. Meanwhile, in the process of identifying the fraudulent user through privacy-preserving computation, the methods and processes for keyword query and key feature query are also different, complicating the query process. The keyword query refers to the platform sending the user ID to the node, and the node returns the query result. The query result contains "yes" or "no", wherein "yes" indicates that the user is a fraudulent user, and "no" indicates that the user is not a fraudulent user; keyword feature-based query indicates that the platform sends the user ID and the feature information to be queried (such as fraud probability, etc.) to the node. After receiving the user ID, the node first determines whether the user ID is in the local database. If it is, the node returns the fraud probability of the user as the query result to the platform; if not, it responds to the platform indicating that no result is found.

In the embodiments of the present application, during the query process using the privacy-preserving computation method, the keyword query and key feature query processes are merged, ensuring that the query process remains consistent regardless of the query approach. In other words, the second information may include the query keyword or query feature (such as a query ID and fraud probability). Whether querying by keyword or feature, the platform can use the same process to query the first user to predict whether the first user is a fraudulent user.

In practical application, the privacy-preserving computation method can specifically include the hidden query, which may also be referred to as anonymous query. The privacy-preserving computation refers to a method in which the platform does not disclose the query-related information to the first node and/or the at least one second node, while enabling the first node and/or the second node to return the fraud-related information that matches the query-related information to the platform, without disclosing any information other than the fraud-related information that matches the query-related information.

In practical application, before querying by using privacy-preserving computation, the platform can also negotiate bucketization technique and an encryption method with the first node and at least one second node. The bucketization technique is used to divide the data, and the encryption method is used to encrypt the transmitted data.

For the first node and/or the at least one second node, each node can use bucketization technique to divide the data stored in the local database to improve query efficiency. For example, if the volume of data stored in the local database on the first node side reaches a pre-configured first threshold, then the first node can use the bucketization technique to divide the data stored in the local database into different buckets, and the volume of data corresponding to each bucket is greater than or equal to a pre-configured second threshold. The second threshold can be understood as indistinguishability, and the values of the first threshold and the second threshold can be set as needed. The bucketization technique specifically includes consistent hashing algorithms, cuckoo filters, modulo operations, and the like. When the volume of data stored in the local database on the first node side does not reach the first threshold, the first node may not divide the data stored in the local database.

In practical application, during the query process by using privacy-preserving computation, the platform can use the same bucketization technique as the first node, and use the query-related information to determine a bucket identifier. The query-related information can include the query identifier. The platform sends the bucket identifier to the first node. After receiving the bucket identifier, the first node can use a negotiated encryption method (such as a blinded RSA algorithm or a homomorphic encryption algorithm) to encrypt all data (also called an obfuscation candidate set) in the bucket corresponding to the bucket identifier, and return the encrypted obfuscation candidate set to the platform. After receiving the encrypted obfuscation candidate set, the platform uses the same encryption method to encrypt the query-related information. By using the encrypted query-related information and the encrypted obfuscation candidate set, the platform can determine the prediction result for the first user; wherein, the platform can communicate with the first node through the hidden query API.

In practical application, when the volume of data stored in the local database on the first node side does not reach the first threshold, the first node may not divide the data stored in the local database. In this case, the platform may encrypt the query-related information using a negotiated encryption method, and send the encrypted query-related information to the first node. After receiving the encrypted query-related information sent by the platform, the first node encrypts all data stored in the local database (also referred to as an obfuscation candidate set) using the same encryption method, and returns the encrypted obfuscation candidate set to the platform. By using the encrypted query-related information and the encrypted obfuscation candidate set, the platform can determine the prediction result for the first user.

For example, when the platform can obtain intersection data (i.e., identical data) by using the encrypted query-related information and the encrypted obfuscation candidate set, it indicates that fraud-related information that matches the query-related information can be found on the first node side. In this case, the platform can predict that the first user is a fraudulent user.

When the platform cannot obtain intersection data by using the encrypted query-related information and the encrypted obfuscation candidate set, it indicates that the fraud-related information that matches the query-related information cannot be found on the first node side. In this case, the first node can send the bucket identifier to the at least one second node and receive at least one encrypted obfuscation candidate set sent by the at least one second node. By sending at least one encrypted obfuscation candidate set sent by at least one second node to the platform, the prediction result for the first user can be determined based on the encrypted query-related information and at least one encrypted obfuscation candidate set.

In practical application, in the case that fraud-related information that matches the query-related information is found on the first node side, the platform can also obtain fraud-related information that matches the query information from the first node as needed, so as to make a more accurate prediction of the first user based on the fraud-related information. The fraud-related information may include the fraud probability, consumption information, etc. of the first user. For example, when it is necessary to obtain fraud-related information that matches the query information from the first node, the platform can use the encrypted query-related information and the encrypted obfuscation candidate set to determine position information of the encrypted query-related information in the encrypted obfuscation candidate set. Based on the negotiated encryption method (such as OT, Oblivious Pseudo-Random Function (OPRF) or homomorphic encryption), the platform can send eighth information to the first node to request the fraud-related information corresponding to the position information.

In practical application, for the historical users, a model can be used for prediction. For the historical user, since a large volume of the user data is stored on the node side, the performance of the constructed model can be guaranteed, that is, the recognition accuracy can be guaranteed. Therefore, the platform can use the model prediction method to jointly predict the first user with the first node and the at least one second node.

Specifically, in an embodiment, the first information of the first user includes that the network access duration of the first user is greater than the first duration, and the strategy for the first user includes determining whether the user is a fraudulent user by model prediction. The second information may include identity-related information of the first user. Specifically, the identity-related information may include an identity identifier of the first user, that is, an identifier of the first user, such as an identification ID, which may also be referred to as an identity ID. This refers to an identifier that can identify the identity of the user, such as a user name, mobile phone number, or ID card number, etc. The embodiments of the present application are not limited thereto, as long as the identity of the user can be identified.

The model prediction method may include a federated learning model, that is, the strategy for the first user includes determining whether the user is a fraudulent user through a federated learning model.

For the historical user, the platform may also use different prediction methods to predict the first user in conjunction with the first node and at least one associated second node. Specifically, prediction may be performed in plaintext or in a privacy-preserving computation manner.

In the process of prediction in plaintext, the platform can directly send the identity-related information to the first node. After receiving the identity identifier, the first node can obtain the sixth information by using the first model and the identity identifier. The first model is the model trained by the first node, and the sixth information represents the prediction result of the first node for the first user. Meanwhile, to ensure the recognition accuracy, the first node can also predict the first user in conjunction with the at least one second node. Specifically, the first node can also send the identity identifier to the associated at least one second node to obtain at least one seventh information by using a second model of the at least one second node. The seventh information represents the prediction result of the second node for the first user, and the second model is the model trained by the second node. Then, the first node can send the sixth information and the at least one seventh information to the platform, enabling the platform to predict whether the first user is a fraudulent user. In this way, the prediction of whether the first user is a fraudulent user by combining the first node and the at least one second node is achieved.

For example, assuming that there are three operator nodes, namely, a node A (i.e., the first node), a node B (i.e., the second node), and a node C (i.e., the second node). After the platform receives, through the node A, the first prediction value of the node A (i.e., the sixth information), the second prediction value of the node B (i.e., the seventh information), and the third prediction value of the node C (i.e., the seventh information), it can calculate the final predicted value (which can be understood as the fraud probability, e.g., 0.91) for the first user by averaging the first prediction value, the second prediction value, and the third prediction value. When the final prediction value is greater than or equal to the third threshold, the platform can predict that the first user is a fraudulent user; otherwise, the platform can predict that the first user is not a fraudulent user. The value of the third threshold can be set as needed, such as 0.9, and the embodiments of the present application are not limited thereto.

In the process of prediction in plaintext, the identity-related information is presented in plaintext, and correspondingly, the third information is also presented in plaintext.

In practical application, using plaintext prediction may leak the user's privacy information. For example, taking a vertical federated model as an example, assuming that there is a service system (i.e., platform), a node A (i.e., the first node) and a node B (i.e., the second node), the service system sends the identity of the user to the node A, wherein the node A and the node B determine the user intersection, and input the identity identifier of the user into the node A and the node B respectively to obtain the joint prediction result of the node A and the node B. At this point, the node A and the node B will obtain the user identity sent by the service system in plaintext, which is not conducive to protecting the user information of the service system. To protect the user's privacy information (such as identity identifiers) from being leaked, prediction can be performed by using privacy-preserving computation to protect the user's privacy information.

In practical application, the privacy-preserving computation method may specifically include hidden prediction, which may also be called anonymous prediction. Before using the privacy-preserving computation method for prediction, the platform may also negotiate an encryption method with the first node and the at least one second node, and the encryption method is used to encrypt the transmitted data.

In practical application, during the prediction process by using privacy-preserving computation, the first node and the at least one second node can substitute all user-related information in the local database into the first model and the second model, respectively, to obtain the corresponding model prediction value (also referred to as an obfuscation candidate set), which can specifically include a first obfuscation candidate set and at least one second obfuscation candidate set. The platform encrypts the identity-related information based on the negotiated encryption method and sends the encrypted identity-related information to the first node. After receiving the encrypted identity-related information, the first node sends the encrypted first obfuscation candidate set (i.e., the sixth information) to the platform. Meanwhile, the first node can also send the encrypted identity-related information to the at least one second node, enabling the at least one second node to send at least one encrypted second obfuscation candidate set (i.e., the seventh information) to the platform through the first node. Then, the platform compares the encrypted first obfuscation candidate set and the at least one second obfuscation candidate set that are sent by the first node and at least one second node respectively, with the encrypted identity-related information. When the encrypted identity-related information is in the encrypted obfuscation candidate sets of both the first node and at least one second node, the platform obtains sub-model prediction values of the identity-related information on the first node side and the second node side based on the negotiated encryption method (such as the OT, the OPRF or the homomorphic encryption), and obtains the final prediction value of the identity-related information based on a model rule, combining the sub-model prediction values on the first node side and the second node side. In the above prediction process, the first node and the at least one second node are unaware of the original data of the identity-related information queried by the platform, thereby ensuring the security of the platform data.

In this way, the platform can perform prediction for the first user without leaking the user's identity-related information, thereby ensuring data security on the platform side and the node side.

From the above description, it can be seen that, in the embodiments of the present application, different nodes can share data through privacy-preserving computation technology to jointly predict whether a user is a fraudulent user without disclosing the original data. In this way, accurate identification of the fraudulent user can be achieved.

Accordingly, an embodiment of the present application provides a user identification method, which is applied to a first node. As shown in FIG. 2, the method includes:
step 201: receiving second information sent by a platform, wherein the second information is at least used to indicate/trigger/initiate to predict whether a first user is a fraudulent user;
step 202: using the second information, in conjunction with at least one second node associated with the first node, to predict whether the first user is the fraudulent user;
step 203: sending third information to the platform, wherein the third information represents a prediction result for the first user.

In practical application, in step 201, for a new user, the second information includes query-related information of the first user; for a historical user, the second information includes identity-related information of the first user. In other words, based on an attribute of the first user, the first node can receive the corresponding second information sent by the platform. Then the first node can jointly predict whether the first user is a fraudulent user with at least one second node associated with the first node, that is, the first node and the at least one second node can jointly predict whether the first user is a fraudulent user.

For a new user, in the process of querying the first user by querying the list, after receiving the query-related information sent by the platform, the first node can query based on the local database.

Specifically, in an embodiment, in the case that fraud-related information that matches the query-related information is found in the local database, the third information is sent to the platform.

In practical application, the local database may also be referred to as a list library, which can specifically include a blacklist library and/or a gray list library; wherein the blacklist library contains fraud-related information of at least one user who has already committed fraud, and the gray list library contains fraud-related information of at least one user whose fraud probability is greater than a fourth threshold. The fraud probability is obtained by the first node based on a preset rule. The preset rule can be understood as a rule preset by the operator corresponding to the first node, or as a rule preset by an institution corresponding to the first node. The value of the fourth threshold can be set as needed, such as 0.8, and the embodiments of the present application are not limited thereto.

In practical application, when the query is made in plaintext, the first node can receive the query-related information directly sent by the platform, and the query-related information is presented in plaintext. Then, the first node searches the local database for fraud-related information that matches the query-related information to determine whether the fraud-related information of the first user is in the local database. In the case that the fraud-related information that matches the query-related information is found in the local database, the first node can predict that the first user is a fraudulent user and send the third information to the platform.

When the query is made by using privacy-preserving computation, and the first node does not use the bucketization technique to divide the data stored in the local database, after receiving the encrypted query-related information sent by the platform, the first node can use the negotiated encryption method to encrypt all data in the local database to obtain an encrypted obfuscation candidate set, and send the encrypted obfuscation candidate set to the platform, enabling the platform to determine the prediction result for the first user.

In the case that the first node uses bucketization technique to divide the data stored in the local database, after receiving the bucket identifier sent by the platform, the first node can use the negotiated encryption algorithm to encrypt all data in the bucket corresponding to the bucket identifier to obtain an encrypted obfuscation candidate set, and send the encrypted obfuscation candidate set to the platform, enabling the platform to determine the prediction result for the first user. The bucket identifier is obtained based on the query-related information.

In practical application, when the first node does not find fraud-related information that matches the query-related information in the local database, that is, the fraud-related information of the first user is not in the local database, the first node needs to jointly query with the associated second node.

Based on this, in an embodiment, in the case that no fraud-related information that matches the query-related information is found in the local database, the query-related information is sent to the at least one second node, and fourth information is obtained, wherein the fourth information represents a prediction result of the first node for the first user;
at least one fifth information sent by the at least one second node is received, wherein the fifth information represents a prediction result of the second node for the first user.

In the case that the local database does not find fraud-related information that matches the query-related information, the first node can obtain the fourth information, which indicates that the first node predicts the first user is not a fraudulent user. Meanwhile, the first node sends the query-related information to the at least one second node to perform a query in conjunction with the at least one second node.

Specifically, when the query is made in plaintext, the first node may directly send the query-related information to each of the at least one second node, enabling each second node to search for fraud-related information that matches the query-related information in a local database. For the second node, in the case that fraud-related information matching the query-related information is found in the local database, the second node may send the fifth information to the first node. The fifth information may include the second node's prediction that the first user is a fraudulent user. In the case that fraud-related information matching the query-related information is not found from the local database, the second node may send the fifth information to the first node. The fifth information may include the second node's prediction that the first user is not a fraudulent user. By sending the fourth information and the at least one fifth information to the platform, the platform is able to predict whether the first user is a fraudulent user.

For the historical user, before predicting the first user by using a model prediction method, it is necessary to train the models on the first node side and the second node side. The trained models can then be used to perform the prediction on the first user.

Based on this, in an embodiment, the method may further include:
determining, based on a Private Set Intersection (PSI), intersection data between a first dataset of the first node and at least one second dataset of the at least one second node;
training a federated model by using the intersection data, wherein the federated model includes the first model.

The first dataset may include all data stored in the local database of the first node; each second dataset may include all data stored in the local database of the second node.

In the related art, the type of the federated model needs to be determined through a manual operation, which will reduce the query efficiency.

In an embodiment of the present application, the type of the federated model can be automatically determined by the first node, thereby improving query efficiency. Specifically, based on the PSI, the first node can determine the intersection data of the first dataset and the at least one second dataset, and the intersection data can be understood as the data that is identical between the first dataset and the second dataset. The intersection data can include identity-related information (such as user ID) and a user feature. Based on the determined intersection data, the first node can determine an overlap rate of the data, which can be understood as the similarity between the intersection data and the first dataset. Then, based on the overlap rate of the data, the first node can determine the type of the federated model (such as a horizontal federated model or a vertical federated model), and synchronize the determined type of the federated model to the at least one second node. The federated model includes the first model of the first node and at least one second model of the at least one second node.

For example, assuming that there are a node A (i.e., the first node) and a node B (i.e., the second node), in the case that the overlap rate of the data is greater than a fifth threshold (e.g., 0.5), the node A may determine that the type of the federated model is horizontal federated, and synchronize the determined type of horizontal federated model to the node B. In the case that the overlap rate of the data is less than or equal to the fifth threshold, the node A may determine that the type of the federated model is vertical federated, and synchronize the determined type of vertical federated model to the node B.

In practical application, the process of training the federated model may include: the first node and at least one second node initialize the first model and at least one second model respectively; in each iteration, the first node sends an encrypted parameter of the first model to the second node, enabling the second node to update a parameter of the second model based on the encrypted parameter of the first model. Accordingly, the second node also sends an encrypted parameter of the second model to the first node, allowing the first node to update a parameter of the first model based on the encrypted parameter of the second model. During the iterative process, in the case that an iteration termination condition is met, the trained first model and the second model are obtained. The iteration termination condition may include that the number of iterations reaches a sixth threshold or the federated model reaches a stable state.

In practical application, in the process of predicting the first user through model prediction for the historical user, after receiving the identity-related information sent by the platform, the first node can jointly with at least one associated second node to predict whether the first user is a fraudulent user.

Specifically, in an embodiment, the using the second information, in conjunction with at least one second node associated with the first node, to predict whether the first user is the fraudulent user includes:
using the identity-related information and the first model to obtain sixth information, which represents a prediction result of the first node for the first user; and sending the identity-related information to the at least one second node;
receiving at least one seventh information sent by the at least one second node, wherein the seventh information represents a prediction result of the second node for the first user;
based on the sixth information and the at least one seventh information, predicting whether the first user is a fraudulent user.

In the process of prediction in plaintext, after receiving the identity-related information directly sent by the platform, the first node uses the first model and the identity-related information to obtain the sixth information, which may include a prediction value of the first node for the first user. Meanwhile, the first node may also send the identity-related information to the at least one second node to obtain at least one seventh information by using the second model of the at least one second node, wherein the seventh information may include a prediction value of the second node for the first user. Then, by sending the sixth information and the at least one seventh information to the platform, the platform can predict whether the first user is a fraudulent user.

Accordingly, an embodiment of the present application provides a user identification method, which is applied to a second node. As shown in FIG. 3, the method includes:
step 301: receiving second information sent by a first node, wherein the second information is at least used to indicate/trigger/initiate to predict whether a first user is a fraudulent user;
step 302: using the second information to predict whether the first user is the fraudulent user, to jointly predict with the first node whether the first user is the fraudulent user.

In practical application, in the process of querying for the new user through a list-based query approach, when no fraud-related information that matches the query-related information is found in the local database of the first node, the second node can query based on the local database after receiving the query-related information sent by the first node.

Specifically, in an embodiment, the using the second information to predict whether the first user is the fraudulent user includes:
searching the local database for fraud-related information that matches the query-related information to obtain a matching result;
sending fifth information to the first node, wherein the fifth information represents a prediction result of the second node for the first user.

In practical application, when the platform uses a plaintext-based query, the second node can receive the query related information sent by the first node, and the query related information is unencrypted information. Then, the second node can search the local database for fraud related information that matches the query related information to determine whether the fraud related information of the first user is in the local database.

In the case that fraud-related information that matches the query-related information is found in the local database, the second node may predict that the first user is a fraudulent user and send the fifth information to the first node. The fifth information may include the second node's prediction that the first user is a fraudulent user.

In the case that no fraud-related information that matches the query-related information is found in the local database, the second node may predict that the first user is not a fraudulent user and send the fifth information to the first node. The fifth information may include the second node's prediction that the first user is not a fraudulent user.

In practical application, when the platform uses privacy-preserving computation to query, and the second node does not use the bucketization technique to divide the data stored in the local database, after receiving the encrypted query-related information sent by the first node, the second node can use the negotiated encryption method to encrypt all data in the local database to obtain an encrypted obfuscation candidate set, and send the encrypted obfuscation candidate set to the first node, which is then sent to the platform by the first node, enabling the platform to determine the prediction result for the first user.

When the platform uses privacy-preserving computation to query, and the second node uses the bucketization technique to divide the data stored in the local database, after receiving the bucket identifier sent by the first node, the second node can use the negotiated encryption algorithm to encrypt all data in the bucket corresponding to the bucket identifier to obtain an encrypted obfuscation candidate set, and send the encrypted obfuscation candidate set to the first node, which is then sent to the platform, enabling the platform to determine the prediction result for the first user.

In the process of predicting the first user through model prediction for the historical user, the second node may receive the identity-related information sent by the first node to jointly predict with the first node whether the first user is the fraudulent user.

Specifically, in an embodiment, the using the second information to predict whether the first user is a fraudulent user includes:
using the identity-related information and the second model, predicting whether the first user is a fraudulent user;
sending seventh information to the first node, wherein the seventh information represents a prediction result of the second node for the first user.

In practical application, in the process of prediction in plaintext, after receiving the identity-related information sent by the first node, the second node uses the second model and the identity-related information to obtain the seventh information, and the seventh information may include the predicted value of the second node for the first user. Then, the second node may send the seventh information to the first node, which is sent to the platform by the first node, enabling the platform to predict whether the first user is a fraudulent user.

In a user identification method provided in the embodiment of the present application, the platform determines, based on first information of the first user, a strategy for the first user; wherein first information of a different user corresponds to a respective different strategy, the first information of the first user is associated with a network access duration of the first user, and at least two nodes in each strategy jointly predict whether the user is a fraudulent user; predicting whether the first user is the fraudulent user. In the solutions provided in the embodiments of the present application, the service system (i.e., the platform) determines different joint anti-fraud strategies for different types of users based on the network access duration of the users, and predicts whether the user is a fraudulent user by combining multiple nodes (such as the first node and the second node) based on the joint anti-fraud strategies of the users. In other words, different nodes share data to jointly predict whether the user is a fraudulent user, so that accurate identification of the fraudulent user can be achieved.

The present application is described in further detail below in conjunction with an implementation example.

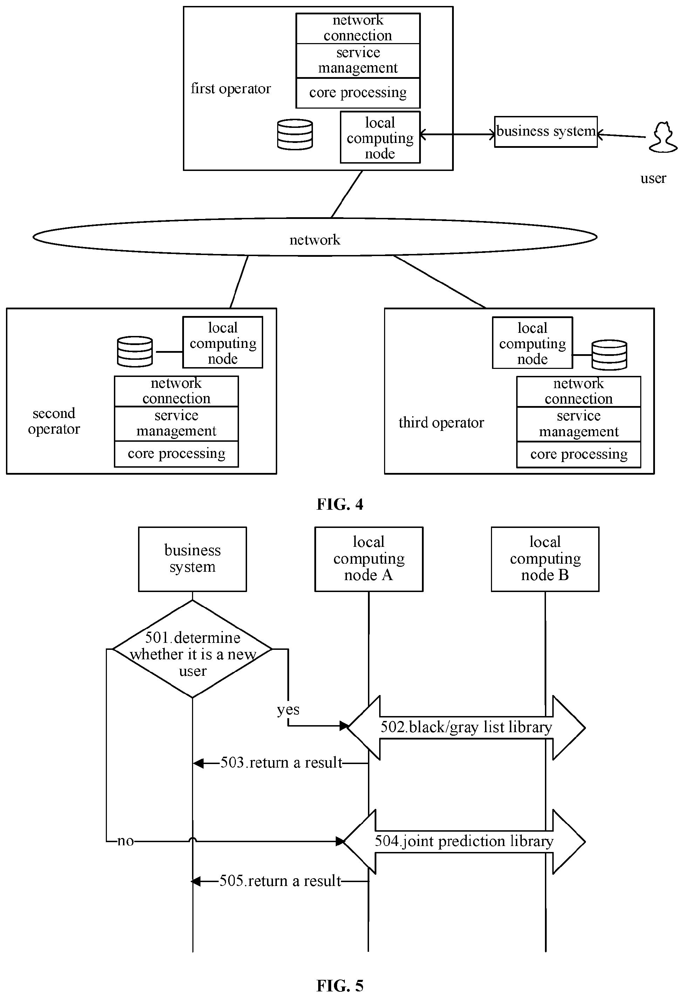

In this implementation example, an anti-fraud user identification solution based on a data sharing service network is proposed; wherein, as shown in FIG. 4, the data sharing service network of this implementation example includes a first operator, a second operator and a third operator, wherein each operator equipped with a local computing node and a local database. The service system (i.e., the platform) is associated with a local node of the first operator, and the local computing node A of the first operator communicates with the local computing node B of the second operator and the local computing node C of the third operator through a network.

In conjunction with FIG. 4, the anti-fraud user identification method based on the data sharing service network in this implementation example, as shown in FIG. 5, includes the following steps.

Step 501: the service system determines whether the user is a new user.

After the user logs into the service system and enters a query keyword, the service system can search the local database for the corresponding network access duration of the user based on login information of the user to make a determination based on the network access duration of the user.

Specifically, when the network access duration of the user is less than or equal to three months (i.e., the first duration mentioned above), the service system determines that the user is a new user and proceeds to step 502; when the network access duration of the user is greater than three months, the service system determines that the user is not a new user but a historical user and proceeds to step 504.

Step 502: the service system queries whether the user has a fraud risk by using a black/gray list database.

For a new network user, the blacklist query is adopted. Based on the needs of the service system, two queries are supported. The first is the plaintext API query, and the second is the hidden query. In the related art, there are multiple ways to implement the hidden query, with varying processes. The process for the hidden query proposed in this implementation example that is not affected by changes in the encryption method and supports various techniques such as OT, OPRF, and HE, which indicates it has high applicability.

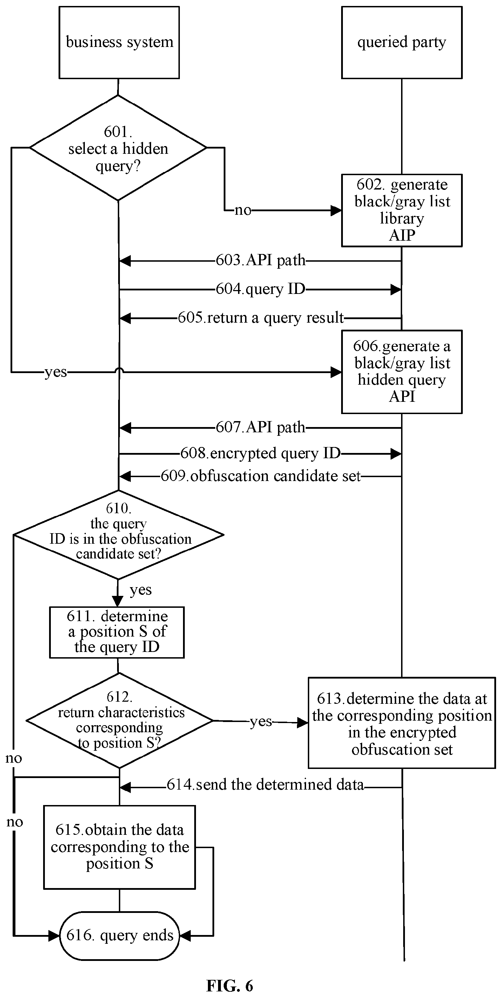

Specifically, the process of querying whether a user has a fraud risk by using a black/gray list library is shown in FIG. 6 and includes the following steps.

Step 601: the service system determines whether to select a hidden query for the query, wherein the service system is the querying party.

The service system may determine whether to select the hidden query to perform the query based on a data security requirement (such as whether the query ID of the user can be leaked).

In practical application, when the querying party chooses to query by the hidden query, the querying party will align keywords with the queried party and it proceeds to step 606; when the querying party chooses to query by the plaintext query, the querying party will align keywords with the queried party and it proceeds to step 602.

Step 602: the queried party generates a black/gray list library API.

The queried parties include the node A of the first operator, the node B of the second operator, and the node C of the third operator.

In practical application, the node A, the node B and the node C generate corresponding APIs based on the local black/gray list library respectively. Then, it proceeds to step 603.

Step 603: the queried party sends a generated API path to the service system; then, it proceeds to step 604.

Step 604: the service system sends the query ID of the user to the queried party.

The service system sends the query ID of the user to the node A through the API path, so that the node A can determine whether the user is in a local black/gray list library. When it is determined whether the user is in the local black/gray list library, it proceeds to step 605; otherwise, the node A sends the query ID to the node B and the node C to query through the local black/gray list library of the node B and the node C, and then it proceeds to step 605.

Step 605: the queried party returns the query result to the service system.

In practical application, when the node A determines that the user is in the local black/gray list library, the node A will return the query result to the service system. When the node A determines that the user is not in the local black/gray list library, after receiving the query results from the nodes B and C, the node A will return the query results of the nodes A, B, and C to the service system.

Step 606: the queried party generates a black/gray list hidden query API.

The node A, the node B and the node C generate the hidden query APIs based on the local black/gray list databases respectively. Next, it proceeds to step 607.

Step 607: the queried party sends the API path to the service system.

Step 608: the service system sends the encrypted query ID to the queried party.

The service system will negotiate an encryption method with the queried party, and encrypt the query ID using the negotiated encryption method to obtain the encrypted query ID, and send the encrypted query ID to the node A.

Step 609: the queried party returns an obfuscation candidate set to the service system.

In practical application, after the node A receives the encrypted query ID, when the local data of the node A does not exceed the threshold, all local data is encrypted using the negotiated encryption method to obtain an encrypted obfuscation candidate set, and the encrypted obfuscation candidate set is sent to the service system.

When the local data of the node A exceeds the threshold, the bucketization technique will be used to divide the local data into different buckets. Correspondingly, the service system will also use the same bucketization technique to determine the corresponding bucket number using the query ID and send the bucket number to the node A, so that the node A can encrypt the data corresponding to the bucket number and return the encrypted obfuscation candidate set to the service system.

Similarly, the node A can also send the encrypted query ID to the node B and the node C to obtain the corresponding candidate set through the node B and the node C. Then, the node A returns the obfuscation candidate sets corresponding to the node A, the node B and the node C to the service system.

Step 610: the service system determines whether the query ID is in the obfuscation candidate set.

When the query ID is in the obfuscation candidate set, it proceeds to step 611; otherwise, it proceeds to step 616.

In practical application, the service system uses blinded RSA (Rivest-Shamir-Adleman) or homomorphic encryption to obtain the intersection of the encrypted query ID and the encrypted obfuscation candidate set. When the intersection can be determined, it indicates that the query ID is in the obfuscation candidate set. When the intersection is empty, it indicates that the query ID is not in the obfuscation candidate set.

Step 611: the service system determines a position S of the query ID in the obfuscation candidate set, and then it proceeds to step 612.

Step 612: the service system determines whether it is necessary to return the user characteristics corresponding to the position S.

When it is determined that the user feature corresponding to the S needs to be returned, it proceeds to step 613; otherwise, it proceeds to step 616.

Step 613: the service system sends the position S to the queried party, so that the queried party determines the data corresponding to the position S in the encrypted obfuscation candidate set based on the position S, and then it proceeds to step 614.

The service system uses the oblivious transmission, the OPRF, the homomorphic encryption and other methods to obtain the feature information corresponding to the position S of the queried party, while the feature information of other positions cannot be obtained.

Step 614: the queried party sends the determined data to the service system.

Step 615: the service system receives the data corresponding to the position S sent by the queried party, and then it proceeds to step 616.

Step 616: the current process ends.

Step 503: the node A sends the query result to the service system.

The query result includes the result returned by the node A in steps 605 and 609.

Step 504: the service system determines to use a joint prediction library to predict whether the user has a fraud risk.

The joint prediction library includes a federal model prediction library.

For the historical user, their risk of fraud is identified by substituting their historical behavior characteristics into the joint anti-fraud model. The traditional joint modeling process is to manually determine a type of federated learning, and the training model processes for horizontal and vertical federated learning are also inconsistent. In the process proposed in this implementation example, the node automatically selects a modeling type based on an overlap rate, and unifies the training model processes of both horizontal and vertical federated learning to achieve the purpose of automated modeling and reduce human intervention. In addition, by improving a model prediction process, the service system uses the hidden query to obtain the prediction results of sub-models of different institutions and merge them together to obtain a final federated model prediction result. In this way, while the service system completes a prediction function, its data is protected from being leaked to the node.

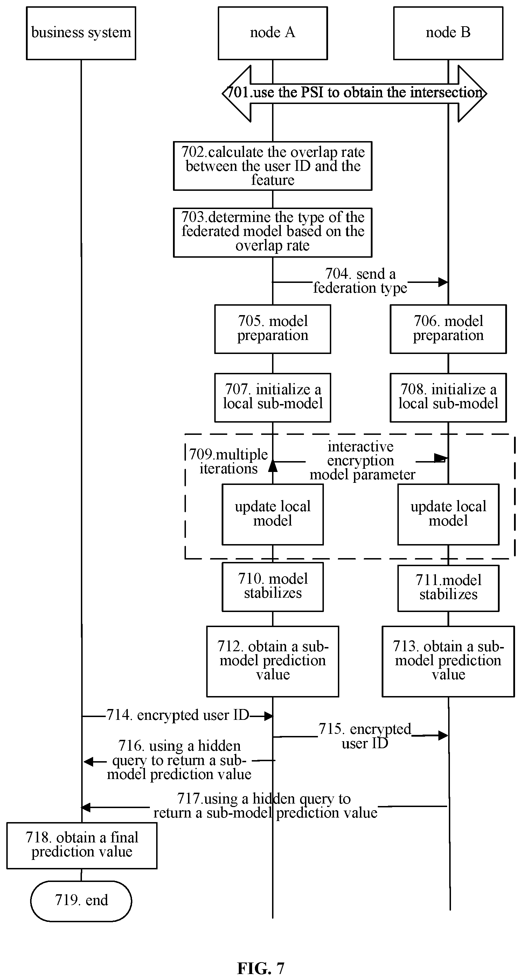

Specifically, the process of predicting whether a user has a fraud risk by using a joint prediction library is shown in FIG. 7 and includes the following steps.

Step 701: the node A and the node B use the PSI to obtain the user ID and feature intersection, and it proceeds to step 702.

Step 702: the node A calculates the overlap rate between the user ID and the feature intersection based on the intersection result and it proceeds to step 703.

Step 703: the node A determines the type of the federated model based on the overlap rate.

The node A can determine the type of federated model by setting a threshold. For example, different types of federated modeling are used when the overlap rate between features and users is within different threshold ranges.

Step 704: the node A sends the type of the federated model to the node B.

Step 705: the node A prepares the model based on the type of the federated model.

The model preparation can be understood as the node A initiating a horizontal federated model or a vertical federated model.

Step 706: the node B prepares the model based on the type of the federated model.

The model preparation can be understood as the node B initiating a horizontal federated model or a vertical federated model.

It should be noted that the execution order of steps 705 and 706 is not sequential.

Step 707: the node A initializes a local sub-model; then, it proceeds to step 709.

Step 708: the node B initializes the local sub-model.

It should be noted that the execution order of steps 707 and 708 is not sequential.

Step 709: during an iteration process, the node A and the node B exchange encrypted model parameters in each iteration to update the local sub-model respectively.

In practical application, the nodes A and B use methods such as federated averaging to aggregate the encrypted model parameters of different nodes to update the local sub-model.

Step 710: the node A determines that the local model has stabilized.

Step 711: the node B determines that the local model has stabilized.

It should be noted that the execution order of steps 710 and 711 is not sequential.

Step 712: the node A inputs a local dataset into the local model to obtain a sub-model prediction value.

Step 713: the node B inputs the local dataset into the local model to obtain the sub-model prediction value.

Step 714: the service system sends an encrypted user ID to the node A.

Step 715: after receiving the encrypted user ID, the node A simultaneously sends the encrypted user ID to the node B, and uses the encrypted user ID to determine the corresponding sub-model prediction value.

Step 716: the node A sends the sub-model prediction value of the node A to the service platform.

Step 717: after receiving the encrypted user ID, the node B uses the encrypted user ID to determine the corresponding sub-model prediction value, and sends the sub-model prediction value of the node B to the service platform through the node A.

Step 718: the service system obtains a final prediction value based on the sub-model prediction value of the node A and the sub-model prediction value of the node B and it proceeds to step 719.

Step 719: the current process ends.

Step 505: the node A sends the prediction result to the service system.

The prediction result includes the result returned by the node A in the steps 716 and 717.

In this implementation example, a different identification solution is adopted based on the attribute of the user, which can not only predict whether a historical user is a fraudulent user, but also predict whether a new user is a fraudulent user.

Furthermore, the federated model prediction process proposed in this implementation example enables the service system to obtain sub-model prediction results for different operators by using hidden prediction. By aggregating the prediction results from different sub-models, the final federated model prediction result can be obtained. In this way, the service system can obtain the prediction value of the query ID without leaking the query ID, thereby protecting the data security of the service system and the data provider (i.e., the operator). At the same time, the process proposed in this implementation example merges keyword query and key feature query, ensuring the process will not change due to different implementation solutions, that is, the complexity of the operation will not be increased.

In addition, in this implementation example, by unifying the vertical and horizontal prediction processes, the service system can be protected from leaking user IDs, while also safeguarding the operator's data.

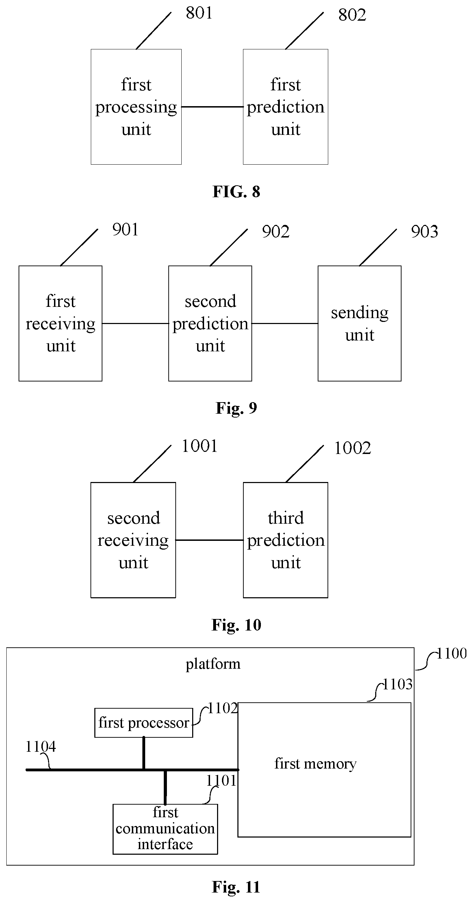

To implement the method on the platform side of the embodiments of the present application, the embodiments of the present application further provide a user identification apparatus, which is arranged on the platform, as shown in FIG. 8, and includes:
a first processing unit 801, configured to determine, based on first information of a first user, a strategy for the first user, wherein first information of a different user corresponds to a respective different strategy, the first information of the first user is associated with a network access duration of the first user, and at least two nodes in each strategy jointly predict whether the user is a fraudulent user;
a first prediction unit 802, configured to predict whether the first user is the fraudulent user.

In an embodiment, the first prediction unit 802 is configured to:
send second information to a first node, wherein the second information is at least used to indicate/trigger/initiate to predict whether the first user is the fraudulent user, and the first node and at least one associated second node jointly predict whether the first user is the fraudulent user;
receive third information sent by the first node, wherein the third information represents a prediction result for the first user;
predict whether the first user is the fraudulent user by using the third information.

In an embodiment, the first processing unit 801 is further configured to determine first information of the first user.

In practical application, the first processing unit 801 and the first prediction unit 802 can be implemented by a processor in the user identification apparatus in combination with a communication interface.

To implement the method on the first node side of the embodiments of the present application, the embodiments of the present application further provide a user identification apparatus, which is arranged on the first node. As shown in FIG. 9, the apparatus includes:
a first receiving unit 901, configured to receive second information sent by a platform, wherein the second information is at least used to indicate/trigger/initiate to predict whether a first user is a fraudulent user;
a second prediction unit 902, configured to use the second information, in conjunction with at least one second node associated with the first node, to predict whether the first user is the fraudulent user;
a sending unit 903, configured to send third information to the platform, wherein the third information represents a prediction result for the first user.

In an embodiment, the second prediction unit 902 is configured to:
use the identity-related information and a first model to obtain sixth information, wherein the sixth information represents a prediction result of the first node for the first user; and send the identity-related information to the at least one second node;
receive at least one seventh information sent by the at least one second node, wherein the seventh information represents a prediction result of the second node for the first user;
predict whether the first user is the fraudulent user based on the sixth information and the at least one seventh information.

In an embodiment, the second prediction unit 902 is further configured to:
determine, based on a Private Set Intersection (PSI), intersection data between a first dataset of the first node and at least one second dataset of the at least one second node;
train a federated model by using the intersection data, wherein the federated model includes the first model.

In practical application, the first receiving unit 901 and the sending unit 903 can be implemented by a communication interface in the user identification apparatus; the second prediction unit 902 can be implemented by a processor in the user identification apparatus in combination with a communication interface.

To implement the method on the second node side of the embodiments of the present application, the embodiments of the present application further provide a user identification apparatus, which is arranged on the second node, as shown in FIG. 10, and includes:
a second receiving unit 1001, configured to receive second information sent by a first node, wherein the second information is at least used to indicate/trigger/initiate to predict whether a first user is a fraudulent user;
a third prediction unit 1002, configured to use the second information to predict whether the first user is the fraudulent user, to jointly predict with the first node whether the first user is the fraudulent user.

The third prediction unit 1002 is configured to:
search a local database for fraud-related information that matches the query-related information to obtain a matching result;
send fifth information to the first node, wherein the fifth information represents a prediction result of the second node for the first user.

In an embodiment, the third prediction unit 1002 is configured to:
use the identity-related information and a second model to predict whether the first user is the fraudulent user;
send seventh information to the first node, wherein the seventh information represents a prediction result of the second node for the first user.

In practical application, the second receiving unit 1001 can be implemented by a communication interface in the user identification apparatus; the third prediction unit 1002 can be implemented by a processor in the user identification apparatus in combination with the communication interface.

It should be noted that the user identification apparatus provided in the above embodiments is illustrated based on the division of the above program modules when performing user identification. In practical application, the above processing can be assigned to different program modules as needed, that is, an internal structure of the apparatus is divided into different program modules to complete all or part of the above-described processing. In addition, the user identification apparatus provided in the above embodiments is based on the same concept as the user identification method embodiments. For specific implementation details, please refer to the method embodiments, which will not be repeated here.

Based on the hardware implementation of the above program modules, and in order to implement the method on the platform side of the embodiments of the present application, the embodiments of the present application further provides a platform, as shown in FIG. 11, a platform 1100 includes:
a first communication interface 1101, capable of exchanging information with the first node;
a first processor 1102, connected to the first communication interface 1101 to implement information interaction with the first node, and configured to execute the method provided by one or more technical solutions of the platform side when executing the computer program;
a first memory 1103, on which the computer program is stored.

Specifically, the first processor 1102 is configured to:
determine, based on first information of a first user, a strategy for the first user, wherein first information of a different user corresponds to a respective different strategy, the first information of the first user is associated with a network access duration of the first user, and at least two nodes in each strategy jointly predict whether the user is a fraudulent user;
predict whether the first user is the fraudulent user.

In an embodiment, the first processor 1102 is configured to:
send second information to a first node through the first communication interface 1101, wherein the second information is at least used to indicate/trigger/initiate to predict whether the first user is the fraudulent user, and the first the node and at least one associated second node jointly predict whether the first user is the fraudulent user;
receive, through the first communication interface 1101, third information sent by the first node, wherein the third information represents a prediction result for the first user;
predict whether the first user is the fraudulent user by using the third information.

In an embodiment, the first processor 1102 is further configured to determine first information of the first user.

It should be noted that the specific processing procedures of the first processor 1102 and the first communication interface 1101 can be understood by referring to the above method.

Obviously, in practical application, the various components in the platform 1100 are coupled together through a bus system 1104. It can be understood that the bus system 1104 is used to implement the connection and communication between these components. In addition to the data bus, the bus system 1104 further includes a power bus, a control bus, and a status signal bus. However, for the sake of clarity, various buses are labeled as the bus system 1104 in FIG. 11.

The first memory 1103 in the embodiments of the present application is used to store various types of data to support the operation of the platform 1100. Examples of such data include: any computer program used to operate on the platform 1100.

The method disclosed in the above embodiments of the present application can be applied to, or implemented by, the first processor 1102. The first processor 1102 may be an integrated circuit chip with signal processing capability. In an implementation process, each step of the above method can be accomplished by an integrated logic circuit in the hardware of the first processor 1102 or in the form of software instructions. The above-mentioned first processor 1102 may be a general-purpose processor, a Digital Signal Processor (DSP), or other programmable logic devices, discrete gates or transistor logic devices, discrete hardware components, etc. The first processor 1102 can implement or execute the various methods, steps and logic block diagrams disclosed in the embodiments of the present application. A general-purpose processor may be a microprocessor or any conventional processor, etc. The steps of the method disclosed in combination with the embodiments of the present application may be directly executed by a hardware decoding processor, or executed through the combination of hardware and software modules in the decoding processor. The software module may be located in a storage medium, which is located in the first memory 1103. The first processor 1102 reads the information in the first memory 1103 and completes the steps of the above method in combination with its hardware.

In an exemplary embodiment, the platform 1100 may be implemented by one or more Application Specific Integrated Circuits (ASICs), DSPs, Programmable Logic Devices (PLDs), Complex Programmable Logic Devices (CPLDs), Field Programmable Gate Arrays (FPGAs), general-purpose processors, controllers, Micro Controller Units (MCUs), microprocessors, or other electronic components to perform the aforementioned methods.

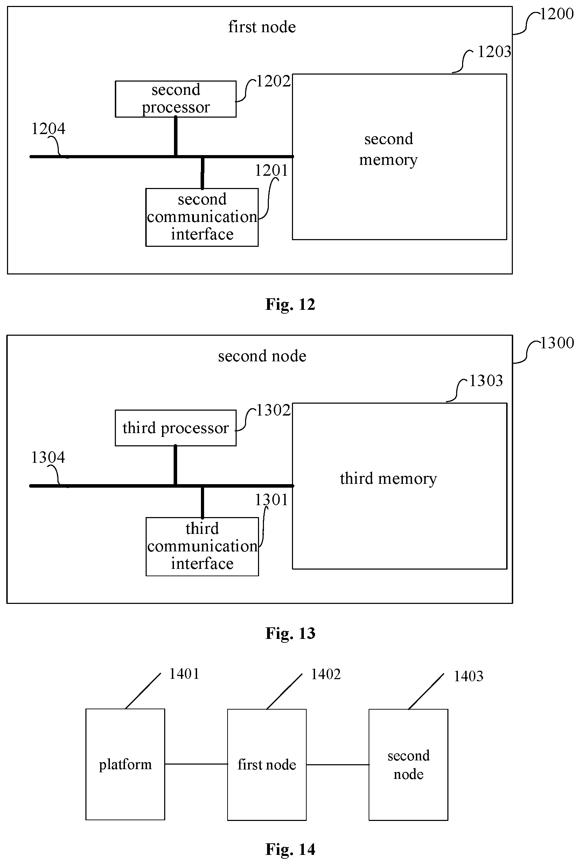

Based on the hardware implementation of the above program module, and in order to implement the method on the first node side of the embodiments of the present application, the embodiments of the present application further provide a first node, as shown in FIG. 12, a first node 1200 includes:
a second communication interface 1201, capable of exchanging information with the platform and the second node;
a second processor 1202, connected to the second communication interface 1201 to implement information interaction with the platform and the second node, and configured to execute the method provided by one or more technical solutions on the first node side when executing the computer program;
a second memory 1203, on which the computer program is stored.

Specifically, the second communication interface 1001 is configured to receive second information sent by a platform, wherein the second information is at least used to indicate/trigger/initiate to predict whether a first user is a fraudulent user; and send third information to the platform, the third information represents a prediction result of the first user;
the second processor 1202 is configured to use the second information, in conjunction with at least one second node associated with the first node, to predict whether the first user is the fraudulent user.

In an embodiment, the second processor 1202 is configured to obtain sixth information using the identity-related information and the first model, wherein the sixth information represents a prediction result of the first node for the first user;
the second communication interface is further used to send the identity-related information to the at least one second node; and receive at least one seventh information sent by the at least one second node, wherein the seventh information represents a prediction result of the second node for the first user;
the second processor 1202 is configured to predict whether the first user is a fraudulent user based on the sixth information and the at least one seventh information.

In an embodiment, the second processor 1202 is further configured to:
determine, based on a Private Set Intersection (PSI), intersection data between a first dataset of the first node and at least one second dataset of the at least one second node;
train a federated model by using the intersection data, wherein the federated model includes the first model.

It should be noted that the specific processing procedures of the second processor 1202 and the second communication interface 1201 can be understood by referring to the above method.

Obviously, in practical application, the various components in the first node 1200 are coupled together through a bus system 1204. It can be understood that the bus system 1204 is used to implement the connection and communication between these components. In addition to the data bus, the bus system 1204 further includes a power bus, a control bus and a status signal bus. However, for the sake of clarity, various buses are labeled as the bus system 1204 in FIG. 12.

The second memory 1203 in the embodiments of the present application is used to store various types of data to support the operation of the first node 1200. Examples of such data include: any computer program used to operate on the first node 1200.

The method disclosed in the above embodiments of the present application can be applied to, or implemented by, the second processor 1202. The second processor 1202 may be an integrated circuit chip with signal processing capability. In an implementation process, each step of the above method can be accomplished by an integrated logic circuit in the hardware of the second processor 1202 or in the form of software instructions. The above-mentioned second processor 1202 may be a general-purpose processor, a DSP, or other programmable logic devices, discrete gates or transistor logic devices, discrete hardware components, etc. The second processor 1202 can implement or execute the various methods, steps and logic block diagrams disclosed in the embodiments of the present application. A general-purpose processor may be a microprocessor or any conventional processor, etc. The steps of the method disclosed in combination with the embodiments of the present application may be directly executed by a hardware decoding processor, or executed through the combination of hardware and software modules in the decoding processor. The software module may be located in a storage medium, which is located in the second memory 1203. The second processor 1202 reads the information in the second memory 1203 and completes the steps of the above method in combination with its hardware.

In an exemplary embodiment, the first node 1200 may be implemented by one or more ASICs, DSPs, PLDs, CPLDs, FPGAs, general purpose processors, controllers, MCUs, Microprocessors, or other electronic components to perform the aforementioned methods.

Based on the hardware implementation of the above program module, and in order to implement the method on the second node side of the embodiments of the present application, the embodiments of the present application further provide a second node, as shown in FIG. 13, the second node 1300 includes:
a third communication interface 1301, capable of interacting with the first node;
a third processor 1302, connected to the third communication interface 1301 to implement interaction with the first node, and configured to execute the method provided by one or more technical solutions on the second node side when executing the computer program;
a third memory 1303, on which the computer program is stored.

Specifically, the third communication interface 1301 is configured to receive second information sent by the first node, wherein the second information is at least used to indicate/trigger/initiate to predict whether a first user is a fraudulent user;
the third processor 1302 is configured to use the second information to predict whether the first user is the fraudulent user, to jointly predict with the first node whether the first user is the fraudulent user.

In an embodiment, the third processor 1302 is configured to search the local database for fraud-related information that matches the query-related information to obtain a matching result;
the third communication interface 1301 is further configured to send fifth information to the first node, wherein the fifth information represents a prediction result of the second node for the first user.

In an embodiment, the third processor 1302 is configured to predict whether the first user is a fraudulent user by using the identity-related information and the second model;
the third communication interface 1301 is further configured to send seventh information to the first node, wherein the seventh information represents a prediction result of the second node for the first user.

It should be noted that the specific processing procedures of the third processor 1302 and the third communication interface 1301 can be understood by referring to the above method.

Obviously, in practical application, the various components in the second node 1300 are coupled together through a bus system 1304. It can be understood that the bus system 1304 is used to implement the connection and communication between these components. In addition to the data bus, the bus system 1304 further includes a power bus, a control bus and a status signal bus. However, for the sake of clarity, various buses are labeled as the bus system 1304 in FIG. 13.

The third memory 1303 in the embodiments of the present application is used to store various types of data to support the operation of the second node 1300. Examples of such data include: any computer program used to operate on the second node 1300.

The method disclosed in the above embodiments of the present application can be applied to, or implemented by, the third processor 1302. The third processor 1302 may be an integrated circuit chip with signal processing capabilities. In an implementation process, each step of the above method can be accomplished by an integrated logic circuit in the hardware of the third processor 1302 or in the form of software instructions. The above-mentioned third processor 1302 may be a general-purpose processor, a DSP, or other programmable logic devices, discrete gates or transistor logic devices, discrete hardware components, etc. The second processor 1302 can implement or execute the various methods, steps and logic block diagrams disclosed in the embodiments of the present application. A general-purpose processor may be a microprocessor or any conventional processor, etc. The steps of the method disclosed in combination with the embodiments of the present application may be directly executed by a hardware decoding processor, or executed through the combination of hardware and software modules in the decoding processor. The software module may be located in a storage medium, which is located in the third memory 1303. The third processor 1302 reads the information in the third memory 1303 and completes the steps of the above method in combination with its hardware.

In an exemplary embodiment, the second node 1300 may be implemented by one or more ASICs, DSPs, PLDs, CPLDs, FPGAs, general purpose processors, controllers, MCUs, Microprocessors, or other electronic components to perform the aforementioned methods.

It can be understood that, in the embodiments of the present application, the memory (first memory 1103, second memory 1203 and third memory 1303) may be a volatile memory or a non-volatile memory, and may also include both volatile and non-volatile memories. The non-volatile memory may be a Read-Only Memory (ROM), a Programmable Read-Only Memory (PROM), an Erasable Programmable Read-Only Memory (EPROM), an Electrically Erasable Programmable Read-Only Memory (EEPROM), a Ferromagnetic Random Access Memory (FRAM), a flash memory, a magnetic surface memory, an optical disc, or a Compact Disc Read-Only Memory (CD-ROM); the magnetic surface memory may be a disk memory or a tape memory . The volatile memory may be a Random Access Memory (RAM), which is used as an external high-speed cache. By way of example but not limitation, many forms of the RAM are available, such as Static Random Access Memory (SRAM), Synchronous Static Random Access Memory (SSRAM), Dynamic Random Access Memory (DRAM), Synchronous Dynamic Random Access Memory (SDRAM), Double Data Rate Synchronous Dynamic Random Access Memory (DDRSDRAM), Enhanced Synchronous Dynamic Random Access Memory (ESDRAM), Synchronous Link Dynamic Random Access Memory (SLDRAM), Direct Memory Bus Random Access Memory (DRRAM). The memory described in the embodiments of the present application is intended to include, but is not limited to, these and any other suitable types of memory.

To implement the method provided in the embodiments of the present application, the embodiments of the present application further provide a user identification system, as shown in FIG. 14, the system includes: a platform 1401, a first node 1402 and at least one second node 1403.

It should be noted that the specific processing procedures of the platform 1401, the first node 1402 and the second node 1403 have been described in detail above and will not be repeated here.

In an exemplary embodiment, the embodiments of the present application further provide a storage medium, specifically a computer-readable storage medium. For example, including a first memory 1103 storing a computer program, the computer program can be executed by the first processor 1102 of the platform 1100 to implement the steps of the method on the platform side. Similarly, it may include a second memory 1203 storing a computer program, wherein the computer program can be executed by the second processor 1202 of the first node 1200 to implement the steps of the method on the first node side. Additionally, it may include a third memory 1303 storing a computer program, the computer program can be executed by the third processor 1302 of the second node 1300 to implement the steps of the aforementioned second node method. The computer-readable storage medium may be a memory such as FRAM, ROM, PROM, EPROM, EEPROM, Flash Memory, magnetic surface memory, optical disk, or CD-ROM.

It should be noted that "first", "second", and the like are used to distinguish similar objects, and are not intended to indicate any particular order or priority.

Furthermore, the technical solutions described in the embodiments of the present application can be combined in any manner, provided that no conflict arises.

The above description is merely related to preferred embodiments of the present application, and is not intended to limit the protection scope of the present application.

## Claims

1. A user identification method, **characterized by** being applied to a platform, comprising:
determining, based on first information of a first user, a strategy for the first user, wherein first information of a different user corresponds to a respective different strategy, the first information of the first user is associated with a network access duration of the first user, and at least two nodes in each strategy jointly predict whether the user is a fraudulent user;
predicting whether the first user is the fraudulent user.

2. The method according to claim 1, **characterized in that** the predicting whether the first user is the fraudulent user comprises:
sending second information to a first node, wherein the second information is at least used to indicate/trigger/initiate to predict whether the first user is the fraudulent user, and the first node and at least one associated second node jointly predict whether the first user is the fraudulent user;
receiving third information sent by the first node, wherein the third information represents a prediction result for the first user;
predicting whether the first user is the fraudulent user by using the third information.

3. The method according to claim 1, **characterized in that** the method further comprises:
determining the first information of the first user.

4. The method according to any one of claims 1 to 3, **characterized in that**, in response to the first information of the first user comprising that the network access duration of the first user is less than or equal to a first duration, the strategy for the first user comprises determining whether the user is the fraudulent user by querying a list.

5. The method according to claim 4, **characterized in that** second information comprises query-related information of the first user.

6. The method according to claim 4, **characterized in that**
the querying is performed by using plaintext; or
the querying is performed by using privacy-preserving computation.

7. The method according to any one of claims 1 to 3, **characterized in that**, in response to the first information of the first user comprising that the network access duration of the first user is greater than a first duration, the strategy for the first user comprises determining whether the user is the fraudulent user through a model prediction.

8. The method according to claim 7, **characterized in that** the second information comprises identity-related information of the first user.

9. The method according to claim 7, **characterized in that**
the prediction is performed by using plaintext; or
the prediction is performed by using privacy-preserving computation.

10. A user identification method, **characterized by** being applied to a first node, comprising:
receiving second information sent by a platform, wherein the second information is at least used to indicate/trigger/initiate to predict whether a first user is a fraudulent user;
using the second information, in conjunction with at least one second node associated with the first node, to predict whether the first user is the fraudulent user;
sending third information to the platform, wherein the third information represents a prediction result for the first user.

11. The method according to claim 10, **characterized in that** the second information comprises query-related information of the first user.

12. The method according to claim 11, **characterized in that**
querying is performed by using plaintext; or
querying is performed by using privacy-preserving computation.

13. The method according to claim 11, **characterized in that** in response to finding, in a local database, fraud-related information that matches the query-related information, sending the third information to the platform.

14. The method according to claim 11, **characterized in that**
in response to not finding, in a local database, fraud-related information that matches the query-related information, sending the query-related information to the at least one second node and obtaining fourth information, wherein the fourth information represents a prediction result of the first node for the first user;
receiving at least one fifth information sent by the at least one second node, wherein the fifth information represents a prediction result of the second node for the first user.

15. The method according to claim 10, **characterized in that** the second information comprises identity-related information of the first user.

16. The method according to claim 15, **characterized in that**
the prediction is performed by using plaintext; or
the prediction is performed by using privacy-preserving computation.

17. The method according to claim 15, **characterized in that** the using the second information, in conjunction with the at least one second node associated with the first node, to predict whether the first user is the fraudulent user comprises:
using the identity-related information and a first model to obtain sixth information, wherein the sixth information represents a prediction result of the first node for the first user; and sending the identity-related information to the at least one second node;
receiving at least one seventh information sent by the at least one second node, wherein the seventh information represents a prediction result of the second node for the first user;
predicting whether the first user is the fraudulent user based on the sixth information and the at least one seventh information.

18. The method according to claim 17, **characterized in that** the method further comprises:
determining, based on a Private Set Intersection (PSI), intersection data between a first dataset of the first node and at least one second dataset of the at least one second node;
training a federated model by using the intersection data, wherein the federated model comprises the first model.

19. A user identification method, **characterized by** being applied to a second node, comprising:
receiving second information sent by a first node, wherein the second information is at least used to indicate/trigger/initiate to predict whether a first user is a fraudulent user;
using the second information to predict whether the first user is the fraudulent user, to jointly predict with the first node whether the first user is the fraudulent user.

20. The method according to claim 19, **characterized in that** the second information comprises query-related information of the first user.

21. The method according to claim 20, **characterized in that** the using the second information to predict whether the first user is the fraudulent user comprises:
searching a local database for fraud-related information that matches the query-related information to obtain a matching result;
sending fifth information to the first node, wherein the fifth information represents a prediction result of the second node for the first user.

22. The method according to claim 21, **characterized in that**
the prediction is performed by using plaintext; or
the prediction is performed by using privacy-preserving computation.

23. The method according to claim 19, **characterized in that** the second information comprises identity-related information of the first user.

24. The method according to claim 23, **characterized in that** the using the second information to predict whether the first user is the fraudulent user comprises:
using the identity-related information and a second model to predict whether the first user is the fraudulent user;
sending seventh information to the first node, wherein the seventh information represents a prediction result of the second node for the first user.

25. The method according to claim 24, **characterized in that**
the prediction is performed by using plaintext; or
the prediction is performed by using privacy-preserving computation.

26. A user identification apparatus, **characterized by** being arranged on a platform, comprising:
a first processing unit, configured to determine, based on first information of a first user, a strategy for the first user, wherein first information of a different user corresponds to a respective different strategy, the first information of the first user is associated with a network access duration of the first user, and at least two nodes in each strategy jointly predict whether the user is a fraudulent user;
a first prediction unit, configured to predict whether the first user is the fraudulent user.

27. A user identification apparatus, **characterized by** being arranged in a first node, comprising:
a first receiving unit, configured to receive second information sent by a platform, wherein the second information is at least used to indicate/trigger/initiate to predict whether a first user is a fraudulent user;
a second prediction unit, configured to use the second information, in conjunction with at least one second node associated with the first node, to predict whether the first user is the fraudulent user;
a sending unit, configured to send third information to the platform, wherein the third information represents a prediction result for the first user.

28. A user identification apparatus, **characterized by** being arranged in a second node, comprising:
a second receiving unit, configured to receive second information sent by a first node, wherein the second information is at least used to indicate/trigger/initiate to predict whether a first user is a fraudulent user;
a third prediction unit, configured to use the second information to predict whether the first user is the fraudulent user, to jointly predict with the first node whether the first user is the fraudulent user.

29. A platform, **characterized by** comprising a first processor and a first communication interface; wherein
the first processor is configured to determine, based on first information of a first user, a strategy for the first user, wherein first information of a different user corresponds to a respective different strategy, the first information of the first user is associated with a network access duration of the first user, and at least two nodes in each strategy jointly predict whether the user is a fraudulent user; and predict whether the first user is the fraudulent user.

30. A first node, **characterized by** comprising a second processor and a second communication interface; wherein
the second communication interface is configured to receive second information sent by a platform, wherein the second information is at least used to indicate/trigger/initiate to predict whether a first user is a fraudulent user;
the second processor is configured to use the second information, in conjunction with at least one second node associated with the first node, to predict whether the first user is the fraudulent user; and send third information to the platform, wherein the third information represents a prediction result for the first user.

31. A second node, **characterized by** comprising a third processor and a third communication interface; wherein
the third communication interface is configured to receive second information sent by the first node, wherein the second information is at least used to indicate/trigger/initiate to predict whether a first user is a fraudulent user;
the third processor is configured to use the second information to predict whether the first user is the fraudulent user, to jointly predict with the first node whether the first user is the fraudulent user.

32. A platform, **characterized by** comprising: a first processor and a first memory for storing a computer program executable by the processor,
wherein the first processor is configured to execute the computer program to implement the steps of the method according to any one of claims 1 to 9.

33. A first node, **characterized by** comprising: a second processor and a second memory for storing a computer program executable by the processor,
wherein the second processor is configured to execute the computer program to implement the steps of the method according to any one of claims 10 to 18.

34. A second node, **characterized by** comprising: a third processor and a third memory for storing a computer program executable by the processor,
wherein the third processor is configured to execute the computer program to implement the steps of the method according to any one of claims 19 to 25.

35. A storage medium storing a computer program, **characterized in that** the computer program is used to be executed by a processor to implement the steps the method according to any one of claims 1 to 9, or the steps of the method according to any one of claims 10 to 18, or the steps of the method according to any one of claims 19 to 25.
